(19) Europäisches Patentamt
European Patent Office
Office européen des brevets

(11) EP 0 394 781 B1

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int Cl.$^6$: **C08L 69/00**, C08L 51/00, C08L 25/08, C08F 2/26

(21) Anmeldenummer: **90107119.1**

(22) Anmeldetag: **12.04.1990**

(54) **Thermoplastische Formmassen auf Basis von aromatischen Polycarbonaten und Vinylpolymerisaten mit verbesserter Thermostabilität**

Thermoplastic moulding compositions based on aromatic polycarbonates and vinylpolymers with higher thermal stability

Masses à mouler thermoplastiques à base de polycarbonates aromatiques et de polymères vinyliques de stabilité thermique modifiée

(84) Benannte Vertragsstaaten:
**DE ES FR GB IT**

(30) Priorität: **25.04.1989 DE 3913507**

(43) Veröffentlichungstag der Anmeldung:
**31.10.1990 Patentblatt 1990/44**

(73) Patentinhaber: **BAYER AG**
**51368 Leverkusen (DE)**

(72) Erfinder:
- **Eichenauer, Herbert, Dr.**
  **D-4047 Dormagen (DE)**
- **Wittmann, Dieter, Dr.**
  **D-5000 Köln 80 (DE)**
- **Schmidt, Adolf, Dr.**
  **D-5000 Köln 80 (DE)**
- **Ott, Karl-Heinz, Dr.**
  **D-5090 Leverkusen 1 (DE)**

(56) Entgegenhaltungen:
**EP-A- 0 005 202**
**EP-A- 0 115 885**
**EP-B- 0 268 916**
**GB-A- 1 444 696**

- **WORLD PATENTS INDEX LATEST Derwent Publications Ltd., London, GB; AN 89-063879 (09) & JP-A-01 014 266 (UBE CYCON KK) 18. Januar 1989**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 394 781 B1

Printed by Jouve, 75001 PARIS (FR)

**Beschreibung**

Die Erfindung betrifft thermostabile thermoplastische Formmassen, bestehend aus einem thermoplastischen aromatischen Polycarbonatharz, einem Pfropfpolymerisat und gegebenenfalls einem thermoplastischen Vinylpolymerisat.

Thermoplastisch verarbeitbare Polymere, insbesondere solche, die als Zähigkeitsmodifikatoren Pfropfkautschuke enthalten, neigen bei der Verarbeitung bei hohen Temperaturen zu unerwünschten Verfärbungen, die die Oberfläche der resultierenden Formteile stören. Im allgemeinen lassen sich derartige Verfärbungen durch den Zusatz geeigneter Stabilisatoren reduzieren (vgl. z.B. EP-PS 176 811), eine verbleibende, mit steigender Verarbeitungstemperatur zunehmende "Restverfärbung" bleibt jedoch stets erhalten, insbesondere dann, wenn als Mischungskomponenten durch Emulsionspolymerisation erzeugte Polymerisate wie Polymerisate aus Vinylaromaten und Acrylnitril, z.B. Styrol/Acrylnitril-Copolymerisate oder Pfropfpolymerisate, z.B. von Styrol und Acrylnitril auf Polybutadien, eingesetzt werden.

Es wurde gefunden, daß Mischungen aus aromatischem Polycarbonat und Vinylpolymerisaten mit sehr hoher Thermostabilität erhalten werden können, wenn als Emulgator bei der durch Emulsionspolymerisation erfolgenden Herstellung der Vinylpolymerisate spezielle Verbindungen eingesetzt werden.

Gegenstand der Erfindung sind somit thermostabile thermoplastische Formmassen aus

A) 95 - 10 Gew.-%, bevorzugt 90 - 10 Gew.-% und besonders bevorzugt 85 - 25 Gew.-% eines thermoplastischen aromatischen Polycarbonats oder eines Gemisches mehrerer aromatischer Polycarbonate und

B) 5 - 90 Gew.-%, bevorzugt 10 - 90 Gew.-% und besonders bevorzugt 15 - 75 Gew.-X eines Gemisches aus

Ba) 100 - 0 Gew.-Teilen, bevorzugt 100 - 20 Gew.-Teilen und besonders bevorzugt 100 - 30 Gew.-Teilen eines oder mehrerer Pfropfpolymerisate und

Bb) 0 - 100 Gew.-Teilen, bevorzugt 0 - 80 Gew.-Teilen und besonders bevorzugt 0 - 70 Gew.-Teilen eines oder mehrerer thermoplastischer Vinylcopolymerisate,

die dadurch gekennzeichnet sind, daß die Polymerisate Ba und/oder Bb durch Emulsionspolymerisation hergestellt worden sind mit Emulgatoren, die durch Zusammenschmelzen von 1 Mol eines Diols der Formel I

$$HO - M - OH \qquad (I)$$

mit

M = 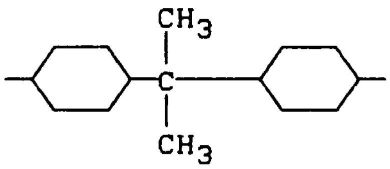 , 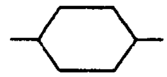 , 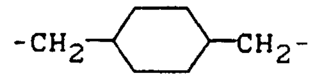

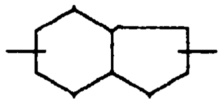 , 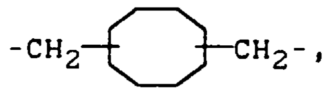 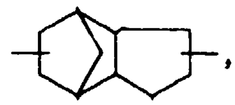

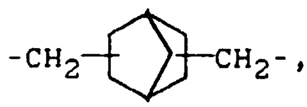 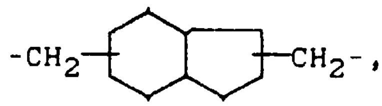

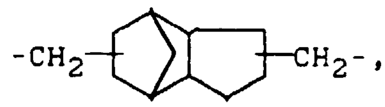

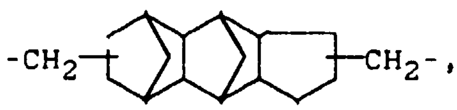 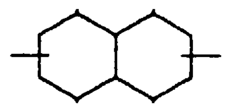 ,

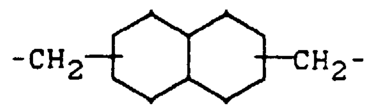

mit 2 Mol Carbonsäureanhydrid der Formel II und/oder III und/oder IV

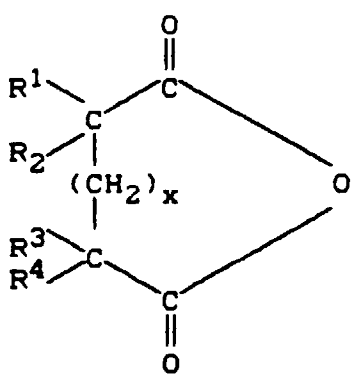

II

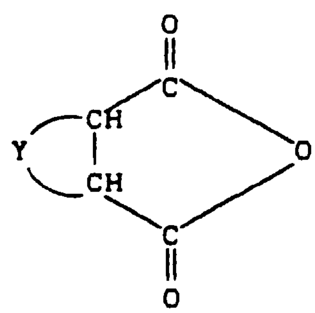

III

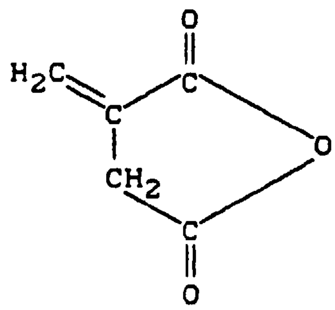

IV

wobei bei x = 0
$R^1$, $R^2$, $R^3$ und $R^4$ Wasserstoff
oder
$R^1$ und/oder $R^3$ $C_1$ bis $C_{35}$-Alkyl oder Alkenyl und $R^2$ und $R^4$ sowie gegebenenfalls $R^1$ oder $R^3$ Wasserstoff
oder
$R^1$ und $R^4$ zusammen eine chemische Bindung und $R^2$ und $R^3$ Wasserstoff
oder
$R^1$ und $R^4$ eine chemische Bindung und $R^2$ und $R^3$ zusammen mit den Kohlenstoffatomen eine o-Phenylengruppe
bei x = 1
$R^1$, $R^2$, $R^3$, $R^4$ Wasserstoff
bedeuten und

Y =

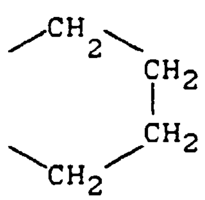

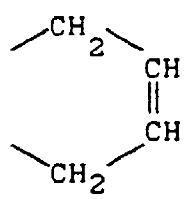

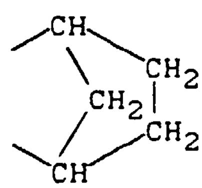

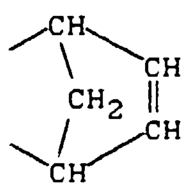

bedeutet,
bei Temperaturen von 100°C bis 300°C, vorzugsweise von 120° bis 220°C, unter Inertgas und anschließende Überführung in Alkalisalze oder Ammoniumsalze erhalten worden sind.

Erfindungsgemäß geeignete, thermoplastische, aromatische Polycarbonate A sind solche auf Basis der Diphenole der Formel (V)

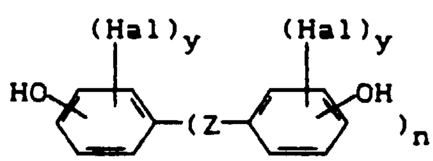

(V),

worin Z eine Einfachbindung, ein $C_1$-$C_5$-Alkylenrest, ein $C_2$-$C_5$-Alkylidenrest, ein $C_5$-$C_6$-Cycloalkylidenrest, -S- oder -$SO_2$-, Hal, Chlor oder Brom, y 0, 1 oder 2 und n 1 oder 0 sind, und gegebenenfalls der Formel (Va)

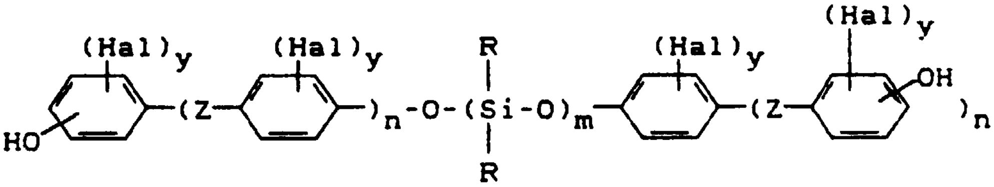

(Va)

worin Z, Hal, y und n die für Formel (V) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$ bedeuten und m eine ganze Zahl von 5 bis 100, vorzugsweise von 20 bis 80, ist.

Erfindungsgemäß geeignete Polycarbonate A sind Homopolycarbonate und Copolycarbonate, wobei die Diphenole der Formel (Va) nur für die Herstellung von Copolycarbonaten mit den Diphenolen der Formel (V) eingesetzt werden, und ihr Gewichtsanteil in den Copolycarbonaten 1 bis 20 Gew.-%, vorzugsweise 1,5 bis 15 Gew.-% und insbesondere 2 bis 10 Gew.-% ist, bezogen auf Gesamtgewicht der Diphenole der Formeln (V) und (Va).

Die Komponente A kann auch aus Mischungen der vorstehend definierten thermoplastischen Polycarbonate bestehen wobei, wenn es sich um Mischungen mit Polydiorganosiloxanen-Polycarbonat-Blockcopolymeren handelt, der Gewichtsanteil der Diphenole (Va), bezogen auf die Gesamtsumme der Diphenole in der Polycarbonatmischung, zwischen 1 und 20 Gew.-% liegt.

Die erfindungsgemäß geeigneten Polycarbonate A sind bekannt; sie können beispielsweise aus den Diphenolen mit Phosgen durch Phasengrenzflächenpolykondensation oder mit Phosgen in homogener Phase, ("Pyridinverfahren"), hergestellt werden, wobei das Molekulargewicht in bekannter Weise durch bekannte Kettenabbrecher eingestellt werden kann. (Für polydiorganosiloxanhaltige Polycarbonate vgl. DE-OS 3 334 873).

Geeignete Kettenabbrecher sind beispielsweise Phenol, p-Chlorphenol, p-tert.-Butylphenol oder 2,4,6-Tribromphenol, und langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472 wie 3,5-Di-tert.-butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen 0,5 Mol-% bis 10 Mol-%, bezogen auf die Summe der jeweils eingesetzten Diphenole (V) und gegebenenfalls (Va).

Die erfindungsgemäß geeigneten Polycarbonate A haben mittlere Molekulargewichte (Gewichtsmittel, $\overline{M}w$, gemessen beispielsweise durch Ultrazentrifugation oder Streulichtmessung) von 10 000 bis 200 000, vorzugsweise von 20 000 bis 80 000.

Geeignete Diphenole der Formel (V) sind beispielsweise Hydrochinon, Resorcin, 4,4'-Dihydroxydiphenyl, 2,2-Bis(4-hydroxyphenyl)-propan, 2,4-Bis-(4-hydroxyphenyl)-2-methylbutan, 1,1-Bis-(4-(hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan.

Bevorzugte Diphenole der Formel (V) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (Va) sind solche, in denen R Methyl, Ethyl, Propyl, n-Butyl, tert.-Butyl oder Phenyl ist.

Bevorzugte Diphenole der Formel (Va) sind die der Formel (Vb)

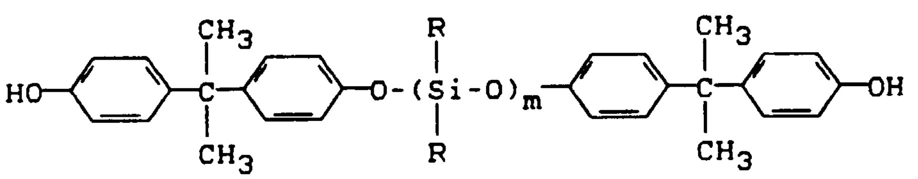

(Vb)

worin die Reste R gleich sind und die vorstehend genannte Bedeutung haben, also bevorzugt Methyl oder Phenyl bedeuten und m eine ganze Zahl von 5 bis 100, vorzugsweise von 20 bis 80, ist.

Die Diphenole der Formel (Va) können aus den entsprechenden Bis-Chlorverbindungen (VI)

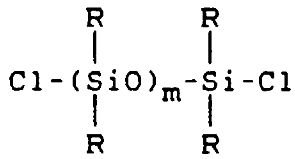

(VI)

und den Diphenolen (V) beispielsweise gemäß US-Patent 3 419 634, in Kombination mit US-Patent 3 189 662 hergestellt werden.

In den Bis-Chlorverbindungen (VI) haben R und m die Bedeutung wie in den Diphenolen (Va) bzw. (Vb).

Die erfindungsgemäß geeigneten Polycarbonate A können in bekannter Weise verzweigt sein, vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan oder die Copolycarbonate der Diphenole der Formel (V) mit 1 bis 20 Gew.-% an Diphenolen der Formel (Va), vorzugsweise der Formel (Vb), bezogen jeweils auf die Gewichtssumme der Diphenole (V) und (Va), bzw. (V) und (Vb).

Geeignete Pfropfpolymerisate Ba sind solche, in denen auf einen Kautschuk mit einer Glastemperatur $T_g \leq 0°C$ (Pfropfgrundlage) Styrol, α-Methylstyrol Methylmethacrylat oder ein Gemisch von 95 - 50 Gew.-% Styrol, α-Methylstyrol, kernsubstituiertem Styrol, Methylmethacrylat oder Mischungen daraus und 5 - 50 Gew.-% Acrylnitril, Methacrylnitril, Maleinsäureanhydrid, N-substituiertes Maleinimid, Methylmethacrylat oder Mischungen daraus (Pfropfauflage) pfropfpolymerisiert sind.

Zur Herstellung der Pfropfpolymerisate Ba geeignete Kautschuke sind insbesondere Polybutadien, Butadien/Styrol-Copolymerisate (beide auch copolymerisiert mit bis zu 30 Gew.-%, bezogen auf Kautschukgewicht, eines niederen Alkylesters von Acryl-oder Methacrylsäure wie Methylmethacrylat, Ethylacrylat, Methylacrylat oder Ethylmethacrylat), Polyisopren, Polychloropren, Alkylacrylatkautschuke (aus $C_1$-$C_8$-Alkylacrylaten, insbesondere Ethyl-, Butyl-, Ethylhexylacrylat). Die Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten sowie kleinere Mengen, vorzugsweise bis zu 5 Gew.-%, bezogen auf Kautschukgewicht, vernetzend wirkender, ethylenisch ungesättigter Monomerer. Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien oder Isopren. Als Acrylatkautschuke kommen auch solche infrage, die einen vernetzten Dienkautschuk aus einem oder mehreren konjugierten Dienen und gegebenenfalls einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dien, sowie auch Silikonkautschuke.

Bevorzugte Kautschuke zur Herstellung der Pfropfpolymerisate Ba sind Dien- und Alkylacrylatkautschuke.

Acrylatkautschuke sind besonders vorteilhaft, wenn sie eine Kern-Mantel-Struktur aufweisen, d.h. einen Kern aus einem anderen Polymerisat enthalten, der von einer Hülle aus vernetztem Alkylacrylatkautschuk umgeben ist.

Die Kautschuke liegen im Pfropfpolymerisat Ba in Form wenigstens partiell vernetzter Teilchen einer mittleren Teilchengröße von 0,05 bis 5 µm, insbesondere 0,075 bis 1 µm vor und besitzen Gelgehalte von bevorzugt wenigstens 70 Gew.-%, der Kautschukgehalt im Pfropfpolymerisat Ba beträgt 5 bis 90 Gew.-%, vorzugsweise 20 bis 90 Gew.-%.

Die Pfropfpolymerisate Ba werden durch radikalische Pfropfpolymerisation in Emulsion, der eingangs genannten Monomerengemische in Gegenwart dieser Kautschuke hergestellt.

Die Pfropfauflage des Pfropfproduktes Ba aus den obengenannten Polymergemischen wird beispielsweise durch Polymerisation der entsprechenden Monomeren in Gegenwart eines Latex (Emulsion) der Pfropfgrundlage erzeugt. Die Polymerisation kann durch Radikalinitiatoren initiiert werden, z.B. mit Persulfaten, Peroxiden, Percarbonaten, Perestern, insbesondere aber mit wasserlöslichen Initiatoren wie Persulfaten oder Redoxinitiatorsystemen. Diese Polymerisationsverfahren sind bekannt.

Bevorzugte Pfropfauflagen werden erhalten durch Pfropfpolymerisation einer Monomermischung aus 50 bis 95 Gew.-Teilen Styrol, α-Methylstyrol, kernsubstituiertem Styrol, Methylmethacrylat oder Mischungen daraus, und 50 bis 5 Gew.-Teilen (Meth)-Acrylnitril, Methylmethacrylat, Maleinsäureanhydrid, N-substituiertem Maleinimid oder Mischungen daraus.

Bevorzugte Copolymerisate Bb sind solche aus Styrol, α-Methylstyrol, kernsubstituiertem Styrol oder Mischungen daraus mit Acrylnitril, Methacrylnitril, Methylmethacrylat, Maleinsäureanhydrid, N-substituiertem Maleinimid oder Mischungen daraus.

Thermoplastische Copolymerisate mit einer Zusammensetzung gemäß Bb entstehen häufig bei der Pfropfpolymerisation zur Herstellung der Komponente Ba als Nebenprodukte, besonders dann, wenn große Mengen Monomere auf kleine Mengen Kautschuk gepfropft werden.

Die erfindungsgemäß eingesetzte Menge an Copolymerisat Bb von 0 bis 80 Gew.-Teilen, vorzugsweise 0 bis 70 Gew.-Teilen, bezogen auf 100 Gew.-Teile aus A + Ba + Bb, bezieht dieses Nebenprodukt der Pfropfpolymerisation nicht mit ein.

Die Copolymerisate Bb sind harzartig, thermoplastisch und kautschukfrei. Besonders bevorzugte Copolymerisate Bb sind solche aus Styrol und/oder α-Methylstyrol mit Acrylnitril und gegebenenfalls mit Methylmethacrylat.

Als kernsubstituierte Styrole seien Halogenstyrole und p-Methylstyrol erwähnt.

Besonders bevorzugte Gewichtsverhältnisse im thermoplastischen Copolymerisat Bb sind 60 bis 80 Gew.-% Styrol und/oder α-Methylstyrol und 40 bis 20 Gew.-%Acrylnitril bzw. Methylmethacrylat.

Die Copolymerisate Bb sind bekannt und lassen sich durch radikalische Polymerisation, insbesondere durch Emulsions-, Suspensions-, Lösungs- oder Massepolymerisation herstellen. Die Copolymerisate Bb besitzen vorzugsweise Molekulargewichte $\overline{M}w$ (Gewichtsmittel, ermittelt durch Lichtstreuung oder Sedimentation) von 15 000 bis 200 000 und Grenzviskositäten von 20 bis 110 ml/g (gemessen in Dimethylformamid bei 25°C).

Die erfindungsgemäß zur Herstellung der Vinylpolymerisate Ba und/oder Bb durch Emulsionspolymerisation verwendeten Emulgatoren werden durch Zusammenschmelzen eines Mols eines cycloaliphatischen Diols (Formel I) oder einer Mischung aus solchen Diolen

$$HO - M - OH \qquad (I)$$

mit

M = 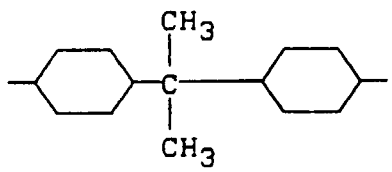 , 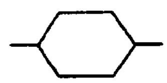 , 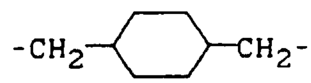

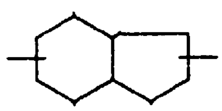 , 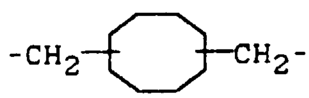 , 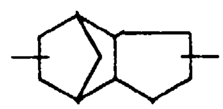 ,

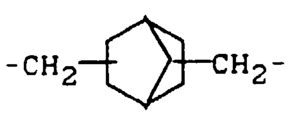 , 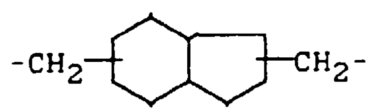 ,

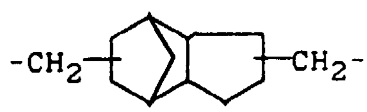 ,

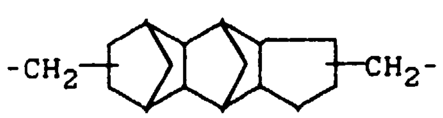 , 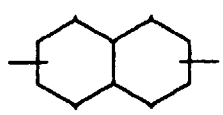 ,

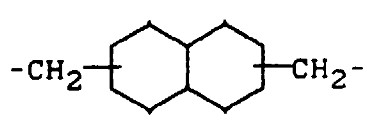

mit zwei Mol eines cycloaliphatischen Anhydrids (Formel II, III, IV) oder einer Anhydridmischung

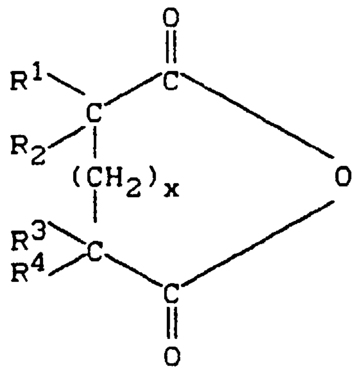

II

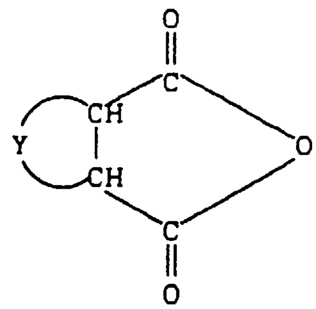

III

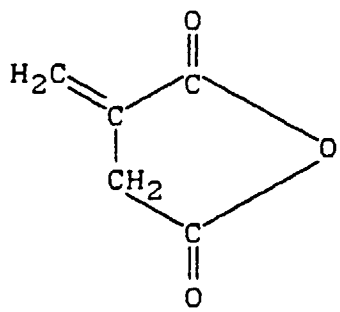

IV

wobei bei x = 0
$R^1$, $R^2$, $R^3$ und $R^4$ Wasserstoff
oder
$R^1$ und/oder $R^3$ $C_1$ bis $C_{35}$-Alkyl oder Alkenyl und $R^2$ und $R^4$ sowie gegebenenfalls $R^1$ oder $R^3$ Wasserstoff
oder
$R^1$ und $R^4$ zusammen eine chemische Bindung und $R^2$ und $R^3$ Wasserstoff
oder
$R^1$ und $R^4$ eine chemische Bindung und $R^2$ und $R^3$ zusammen mit den Kohlenstoffatomen eine o-Phenylengruppe
bei x = 1
$R^1$, $R^2$, $R^3$, $R^4$ Wasserstoff
bedeuten und

Y =

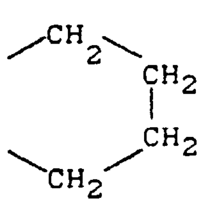

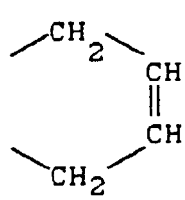

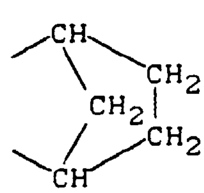

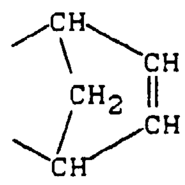

bedeutet, bei Temperaturen von 100°C bis 300°C, vorzugsweise von 120° bis 220°C, unter Inertgas, vorzugsweise Stickstoff, und an schließende Überführung in Alkalisalze oder Ammoniumsalze durch Auflösung der sauren Reaktionsprodukte in wäßriger Alkalilösung oder wäßriger Ammoniaklösung hergestellt.

Als Beispiele für geeignete Diole seien genannt:

2,2-Bis- (4-hydroxycyclohexyl)-propan
1,4-Cyclohexandiol
1,4-Bis-hydroxymethyl-cyclohexan
Bis-hydroxymethyl-hexahydro-4,7-methanoindan (als "TDC-Diol" handelsüblich, hergestellt durch Hydroformylierung von Dicyclopentadien)
Bis-hydroxymethyl-bicyclo-(4,3,0) nonan
Bis-hydroxymethyl-norbornan
Bis-hydroxymethyl-cyclooctan

Bei den genannten Diolen handelt es sich meist um Isomerengemische.

Als Beispiele für geeignete Anhydride seien genannt:

Hexahydrophthalsäureanhydrid
Tetrahydrophthalsäureanhydrid
5-Norbornen-2,3-dicarbonsäureanhydrid
Norbornandicarbonsäureanhydrid
Maleinsäureanhydrid
Itaconsäureanhydrid

Die beiden letztgenannten Anhydride werden bevorzugt in Kombination mit gesättigten Anhydriden mit den oben genannten Diolen umgesetzt.

Die beim Zusammenschmelzen von Diol und Anhydrid ablaufende Reaktion läßt sich wie folgt darstellen:

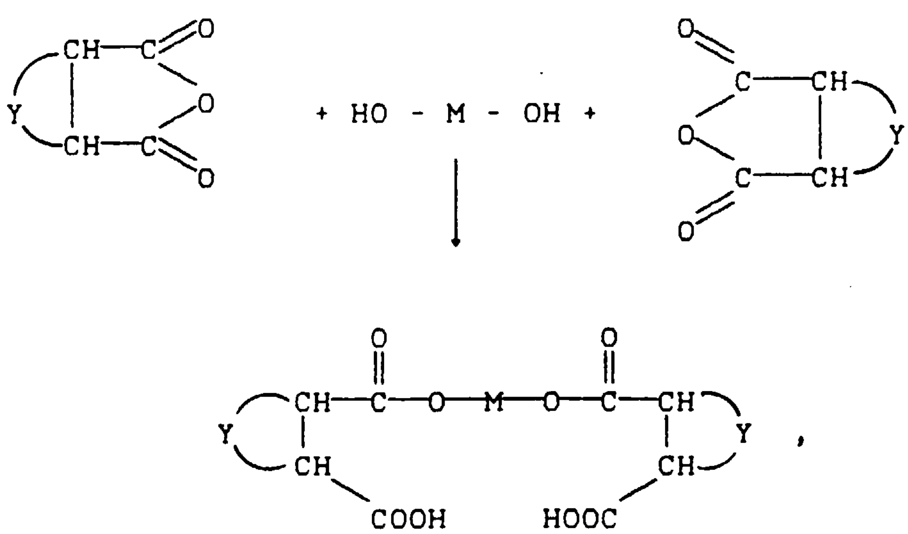

nach Neutralisation mit Alkalihydroxid oder wäßrigem Ammoniak liegen die Emulgatoren in Form der Salze

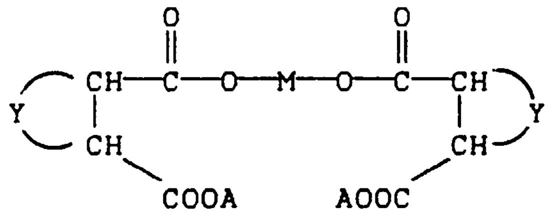

A = Alkalimetall, vorzugsweise Na und/oder K, Ammonium vor.

Die Emulgatoren werden bei der Herstellung der Vinylpolymerisate Ba und/oder Bb durch Emulsionspolymerisation eingesetzt. Vorzugsweise werden sie zur Herstellung des Pfropfkautschuks Ba verwendet, sowohl bei der Herstellung des Kautschuks, vorzugsweise Polybutadien, durch Emulsionspolymerisation als auch bei der Pfropfreaktion, vorzugsweise der Emulsionspolymerisation von Mischungen aus Styrol und Acrylnitril oder von Methylmethacrylat in Gegenwart von Polybutadienlatices.

Die erfindungsgemäßen Formmassen können übliche Zusätze wie Pigmente, Füllstoffe, Stabilisatoren, Antistatika, Gleitmittel, Entformungsmittel, Flammschutzmittel und dergleichen enthalten.

Bevorzugte Flammschutzmittel sind Phosphorverbindungen wie z.B. Tributylphosphat, Tris-(2-chlorethyl)-phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri(isopropylphenyl)phosphat, halogensubstituierte Arylphosphate, Methanphosphonsäuredimethylester, Methanphosphonsäurediphenylester und Phenylphosphonsäurediethylester, vorzugsweise in Kombination mit Tetrafluorethylenpolymerisaten mit Fluorgehalten von 65 bis 76 Gew.-% wie z.B. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Gegebenenfalls können auch organische Halogenverbindungen wie z.B. Decabromdiphenylether, Octabromdiphenyl, Octabromdiphenylether und Tribromtetrachlortoluol, ferner oligomere Bromverbindungen wie beispielsweise Oligocarbonate auf Basis Tetrabrombisphenol A und schließlich auch polymere Bromverbindungen wie beispielsweise hochmolekulare Polycarbonate auf Basis Tetrabrombisphenol A oder kernbromierte Polyphenylenoxide eingesetzt werden.

Die erfindungsgemäßen Formmassen werden mit den für Thermoplasten üblichen Methoden, z.B. durch Spritzguß, zu Formteilen wie Gehäuseteilen für Haushalts- und Elektrogeräte, Profilteilen, Automobilinnenausstattungen, Folien, u.a. Teilen verarbeitet.

Die Formteile zeichnen sich durch sehr gute Oberflächeneigenschaften wie hellen Rohton und guten Glanz aus. Die mechanischen Eigenschaften wie Schlagzähigkeit und Wärmeformbeständigkeit werden nicht beeinträchtigt, sondern teilweise sogar verbessert.

Beispiele

Eingesetzte Polymere

A) Styrol/Acrylnitril (SAN) = 72 : 28 - Copolymerisat mit einem $\overline{M}_w$ von ca. 80.000 mit $\overline{M}_w/\overline{M}_n - 1 \leq 2$

B) Aromatisches Polycarbonat aus 2,2-Bis-(4-hydroxyphenyl)-propan (Bisphenol A) mit einer relativen Viskosität von 1,26 (gemessen in $CH_2Cl_2$ bei 25°C in Form einer 0,5 Gew.-%igen Lösung)

C) Pfropfkautschuk erhalten nach folgender Vorschrift:
50 Gew.-Teile Polybutadien (in Form eines Latex, der unter Verwendung der Verbindung

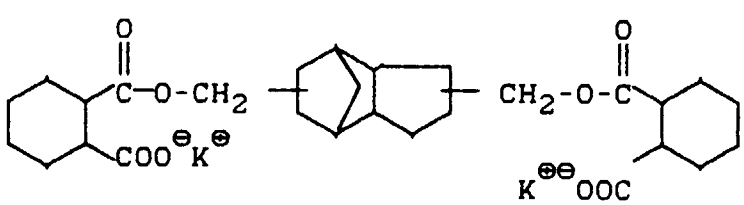

als Emulgator hergestellt wurde, Feststoffgehalt 25 Gew.-%, mittlerer Teilchendurchmesser $d_{50}$ = 400 nm) werden unter Stickstoff auf 63°C erwärmt und mit 0,5 Gew.-Teilen $K_2S_2O_8$ (gelöst in 15 Gew.-Teilen Wasser) versetzt. Danach werden ein Gemisch aus 36 Gew.-Teilen Styrol und 14 Gew.-Teilen Acrylnitril sowie 1,5 Gew.-Teile des Natriumsalzes der disproportionierten Abietinsäure (gelöst in 15 Gew.-Teilen Wasser) innerhalb 4 Stunden zudosiert, wobei die Pfropfreaktion stattfindet. Nach einer Nachreaktionszeit wird der Latex in einer Magnesiumsulfat/Essigsäure-Lösung koaguliert und das resultierende Pulver bei 70°C in Vakuum getrocknet.

D) Pfropfkautschuk erhalten nach folgender Vorschrift:
50 Gew.-Teile Polybutadien (in Form eines Latex, der unter Verwendung der Verbindung

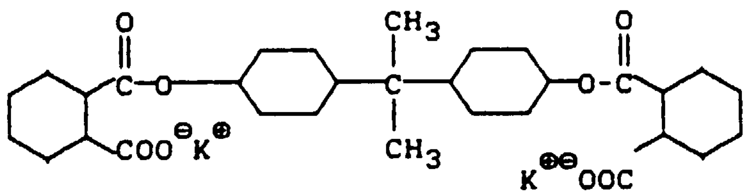

als Emulgator hergestellt wurde, Feststoffgehalt 25 Gew.-%, mittlerer Teilchendurchmesser $d_{50}$ = 100 nm) werden wie unter (C) beschrieben mit einem Gemisch aus 36 Gew.-Teilen Styrol und 14 Gew.-Teilen Acrylnitril gepfropft und aufgearbeitet.

E) Pfropfkautschuk erhalten nach folgender Vorschrift:
50 Gew.-Teile Polybutadien (in Form eines Latex, der unter Verwendung des Natriumsalzes der disproproportionierten Abietinsäure hergestellt wurde, Feststoffgehalt 25 Gew.-%, mittlerer Teilchendurchmessert $d_{50}$ = 400 nm) werden wie unter (C) beschrieben mit einem Gemisch aus 36 Gew.-Teilen Styrol und 14 Gew.-Teilen Acrylnitril gepfropft, wobei anstatt des Natriumsalzes der disproportionierten Abietinsäure 1,5 Gew.-Teile der Verbindung

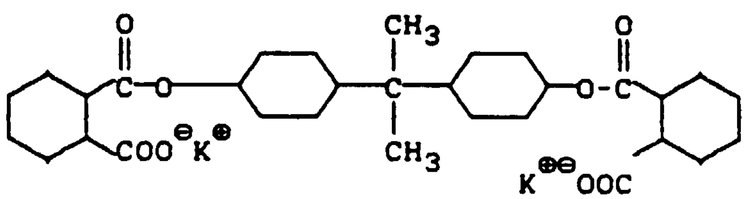

als Emulgator eingesetzt werden. Die Aufarbeitung erfolgt analog der Herstellung von (C).

F) Pfropfkautschuk erhalten nach folgender Vorschrift:
50 Gew.-Teile Polybutadien (in Form des auch bei der Herstellung von Pfropfkautschuk (D) eingesetzten Latex) werden wie unter (E) beschrieben mit einem Gemisch aus 36 Gew.-Teilen Styrol und 14 Gew.-Teilen Acrylnitril gepfropft und aufgearbeitet.

G) Pfropfkautschuk erhalten nach folgender Vorschrift:
50 Gew.-Teile Polybutadien (in Form des auch bei der Herstellung von Pfropfkautschuk (C) eingesetzten Latex) werden wie unter (C) beschrieben mit einem Gemisch aus 36 Gew.-Teilen Styrol und 14 Gew.-Teilen Acrylnitril gepfropft, wobei anstatt des Natriumsalzes der disproportionierten Abietinsäure 1,5 Gew.-Teile der Verbindung

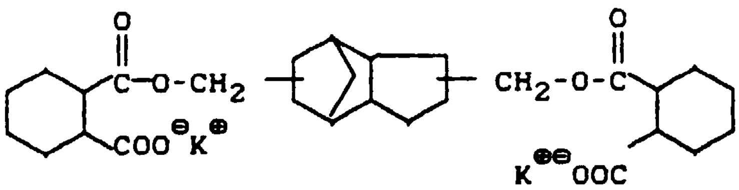

als Emulgator eingesetzt wurde. Die Aufarbeitung erfolgt analog der Herstellung von (C).

H) Pfropfkautschuk erhalten nach folgender Vorschrift (Vergleich):
50 Gew.-Teile Polybutadien (in Form eines Latex, der unter Verwendung des Natriumsalzes der disproportionierten Abietinsäure hergestellt wurde, Feststoffgehalt 25 Gew.-%, mittlerer Teilchendurchmesser $d_{50}$ = 400 nm) werden wie unter (C) beschrieben mit einem Gemisch aus 36 Gew.-Teilen Styrol und 14 Gew.-Teilen Acrylnitril gepfropft und aufgearbeitet.

Beispiele 1 bis 5 (erfindungsgemäß) und 6 (nicht erfindungsgemäß)

Die oben beschriebenen Polymerkomponenten wurden in den in Tabelle 1 angegebenen Gewichtsteilen in einem Innenkneter bei 200°C miteinander vermischt. Das erhaltene Material wurde granuliert und bei 260°C durch Spritzgießen zu Probekörpern verarbeitet, wonach Kerbschlagzähigkeit (ISO 180 A) und Wärmeformbeständigkeit Vicat B (DIN 53 460) ermittelt wurden. Die Beurteilung der Thermostabilität erfolgte nach Verarbeitung bei 290°C durch Vergleich der Rohtöne an planaren Plättchen der Abmessungen 60 x 40 x 2 mm.

Die Bestimmung der thermoplastischen Verarbeitbarkeit erfolgte durch Messung des Fülldruckes (siehe F. Johannaber, Kunststoffe 74 (1984), 1, Seiten 2-5).

In Tabelle 1 sind die Zusammensetzungen der untersuchten Formmassen sowie die erhaltenen Prüfdaten zusammengestellt. Gegenüber dem Vergleichsversuch besitzen die erfindungsgemäßen Einstellungen deutlich verbesserte Thermostabilitäten sowie in der Regel bessere Verarbeitbarkeiten und höhere Wärmeformbeständigkeiten.

**T a b e l l e 1** Zusammensetzungen und Prüfdaten der Formmassen

| Beispiel Nr. | A Gew.-Teile | B Gew.-Teile | C Gew.-Teile | D Gew.-Teile | E Gew.-Teile | F Gew.-Teile | G Gew.-Teile | H Gew.-Teile | RT $a_k$ ($kJ/m^2$) | $-40^0 C$ $a_k$ ($kJ/m^2$) | Vicat B ($^\circ C$) | Fülldruck ($260^0 C$) bar | Thermostabilität *) |
|---|---|---|---|---|---|---|---|---|---|---|---|---|---|
| 1 | 16 | 60 | 24 | - | - | - | - | - | 67 | 54 | 120 | 64 | 1 |
| 2 | 16 | 60 | - | 24 | - | - | - | - | 52 | 48 | 122 | 65 | 1 |
| 3 | 16 | 60 | - | - | 24 | - | - | - | 57 | 56 | 123 | 73 | 2 |
| 4 | 16 | 60 | - | - | - | 24 | - | - | 59 | 55 | 123 | 65 | 1 |
| 5 | 16 | 60 | - | - | - | - | 24 | - | 54 | 54 | 122 | 83 | 1 |
| 6 (Vergleich) | 16 | 60 | - | - | - | - | - | 24 | 53 | 37 | 120 | 84 | 3-4 |

*) 1 = sehr heller Rohton
2 = heller Rohton
3 = gelblicher Rohton
4 = gelber Rohton

**Patentansprüche**

**1.** Thermoplastische Formmassen aus

A) 95 - 10 Gew.-% eines thermoplastischen aromatischen Polycarbonats oder eines Gemisches mehrerer aromatischer Polycarbonate und

B) 5 - 90 Gew.-% eines Gemisches aus

Ba) 100 - 0 Gew.-Teilen eines oder mehrerer Pfropfpolymerisate und

Bb) 0 - 100 Gew.-Teilen eines oder mehrerer thermoplastischer Vinylcopolymerisate,

dadurch gekennzeichnet, daß die Polymerisate Ba und/oder Bb durch Emulsionspolymerisation hergestellt worden sind mit Emulgatoren, die durch Zusammenschmelzen von 1 Mol eines Diols der Formel I

$$HO - M - OH \quad (I)$$

mit

M = 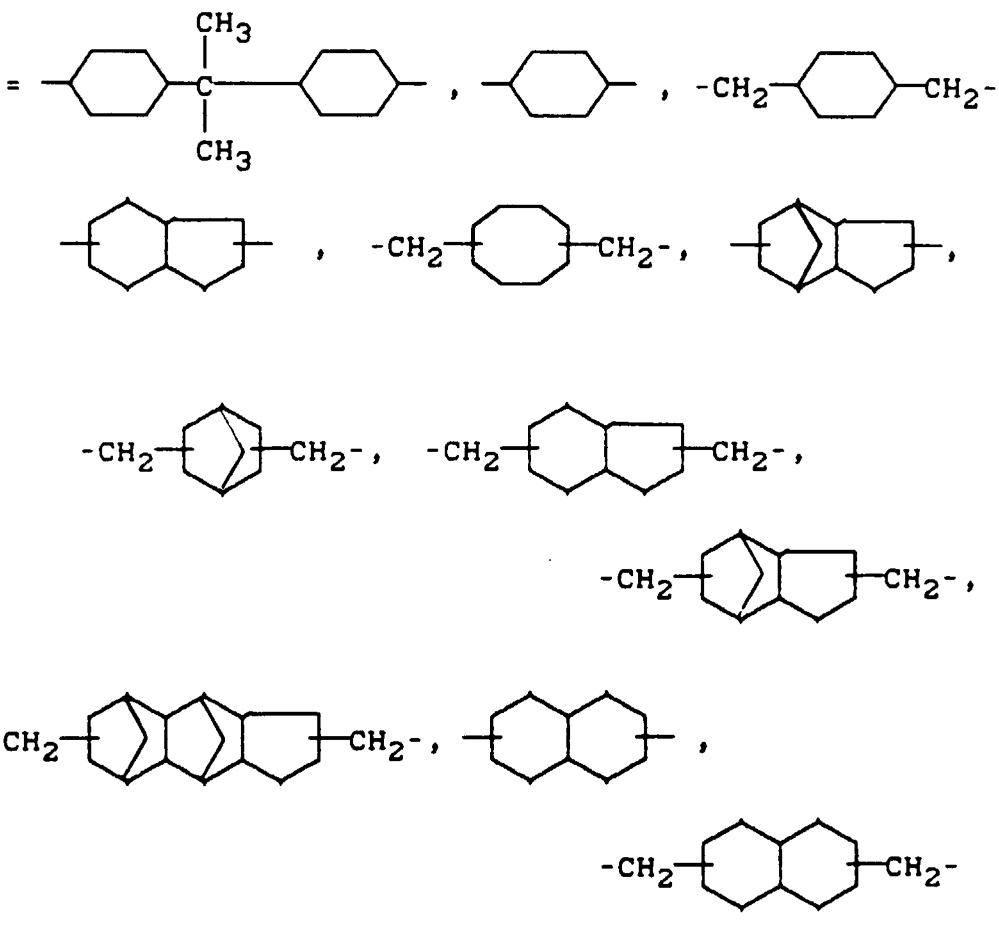

mit 2 Mol Carbonsäureanhydrid der Formel II und/oder III und/oder IV

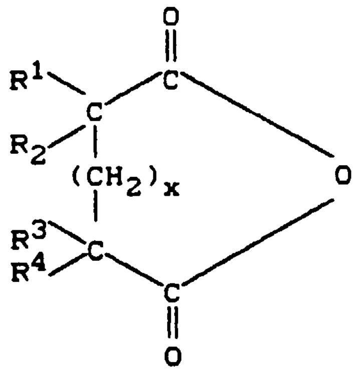

II

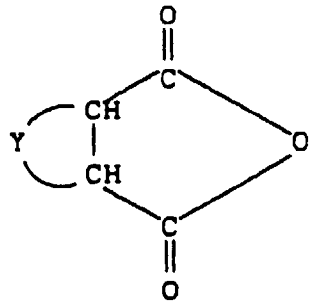

III

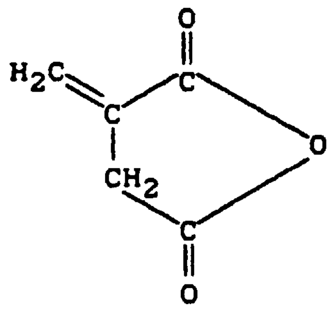

IV

wobei bei x = 0
$R^1$, $R^2$, $R^3$ und $R^4$ Wasserstoff
oder
$R^1$ und/oder $R^3$ $C_1$ bis $C_{35}$-Alkyl oder Alkenyl und $R^2$ und $R^4$ sowie gegebenenfalls $R^1$ oder $R^3$ Wasserstoff
oder
$R^1$ und $R^4$ zusammen eine chemische Bindung und $R^2$ und $R^3$ Wasserstoff
oder
$R^1$ und $R^4$ eine chemische Bindung und $R^2$ und $R^3$ zusammen mit den Kohlenstoffatomen eine o-Phenylengruppe
bei x = 1
$R^1$, $R^2$, $R^3$, $R^4$ Wasserstoff
bedeuten und

Y = 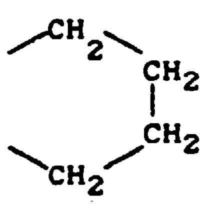 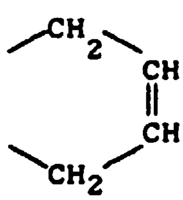 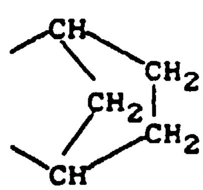

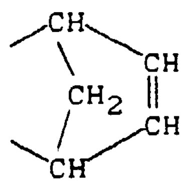

bedeutet,
bei Temperaturen von 100°C bis 300°C unter Inertgas und anschließende Überführung in Alkalisalze oder Ammoniumsalze erhalten worden sind.

**2.** Thermoplastische Formmassen gemäß Anspruch 1, dadurch gekennzeichnet, daß als Emulgator

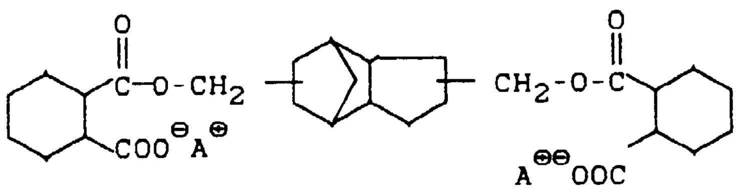

mit A = Alkalimetall, Ammonium eingesetzt wird.

**3.** Thermoplastische Formmassen gemäß Anspruch 1, dadurch gekennzeichnet, daß als Emulgator

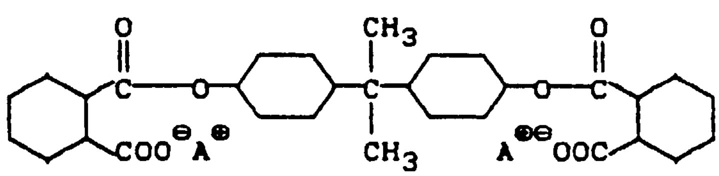

mit A = Alkalimetall, Ammonium eingesetzt wird.

**4.** Thermoplastische Formmassen gemäß Anspruch 1
dadurch gekennzeichnet, daß die Polymerisate Ba und/oder Bb durch Emulsionspolymerisation hergestellt worden sind mit Emulgatoren, die durch Zusammenschmelzen von 1 Mol eines Diols der Formel I

$$HO - M - OH \qquad (I)$$

mit

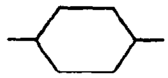 , 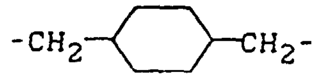

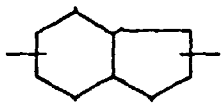 , 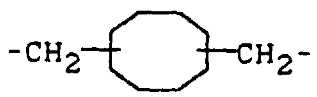 , 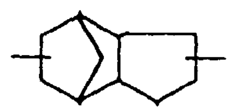 ,

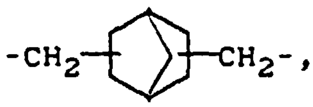 , 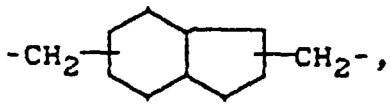 ,

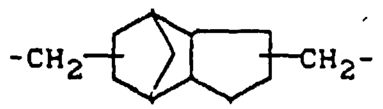 ,

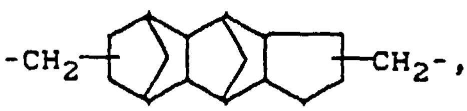 , 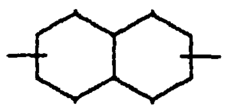 ,

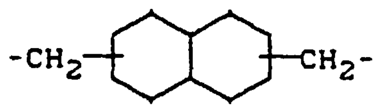

mit 2 Mol Carbonsäureanhydrid der Formel II und/oder III und/oder IV

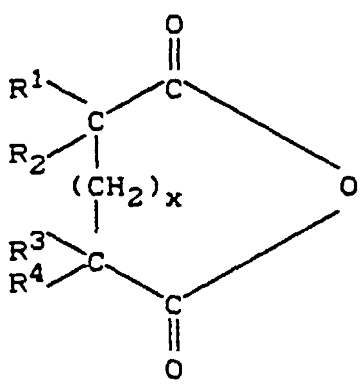

II

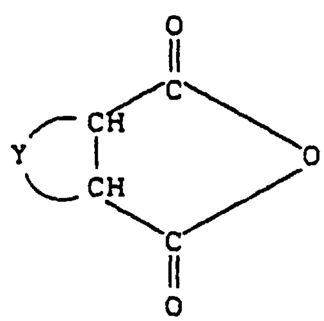

III

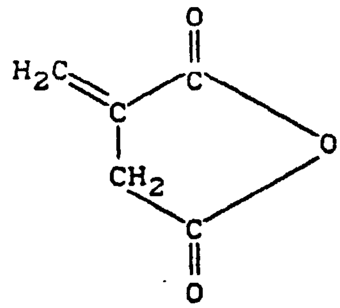

IV

wobei bei x = 0
$R^1$, $R^2$, $R^3$ und $R^4$ Wasserstoff
oder
$R^1$ und/oder $R^3$ $C_1$ bis $C_{35}$-Alkyl oder Alkenyl und $R^2$ und $R^4$ sowie gegebenenfalls $R^1$ oder $R^3$ Wasserstoff
oder
$R^1$ und $R^4$ zusammen eine chemische Bindung und $R^2$ und $R^3$ Wasserstoff
oder
$R^1$ und $R^4$ eine chemische Bindung und $R^2$ und $R^3$ zusammen mit den Kohlenstoffatomen eine o-Phenylengruppe
bei x = 1
$R^1$, $R^2$, $R^3$, $R^4$ Wasserstoff
bedeuten und

Y = 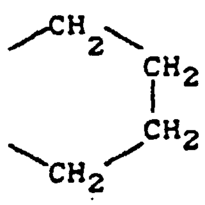 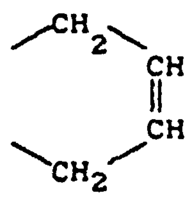 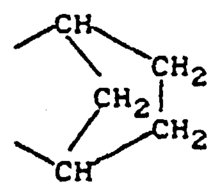

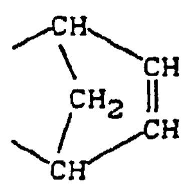

bedeutet,
bei Temperaturen von 100°C bis 300°C unter Inertgas und anschließende Überführung in Alkalisalze oder Ammoniumsalze erhalten worden sind.

**5.** Verfahren zur Herstellung von thermoplastischen Formmassen aus

A) 95 - 10 Gew.-% eines thermoplastischen aromatischen Polycarbonats oder eines Gemisches mehrerer aromatischer Polycarbonate und

B) 5 - 90 Gew.-% eines Gemisches aus

Ba) 100 - 0 Gew.-Teilen eines oder mehrerer Pfropfpolymerisate und

Bb) 0 - 100 Gew.-Teilen eines oder mehrerer thermoplastischer Vinylcopolymerisate,

dadurch gekennzeichnet, daß die Polymerisate Ba und/oder Bb durch Emulsionspolymerisation hergestellt werden mit Emulgatoren, die durch Zusammenschmelzen von 1 Mol eines Diols der Formel I

$$HO - M - OH \qquad (I)$$

mit

M =
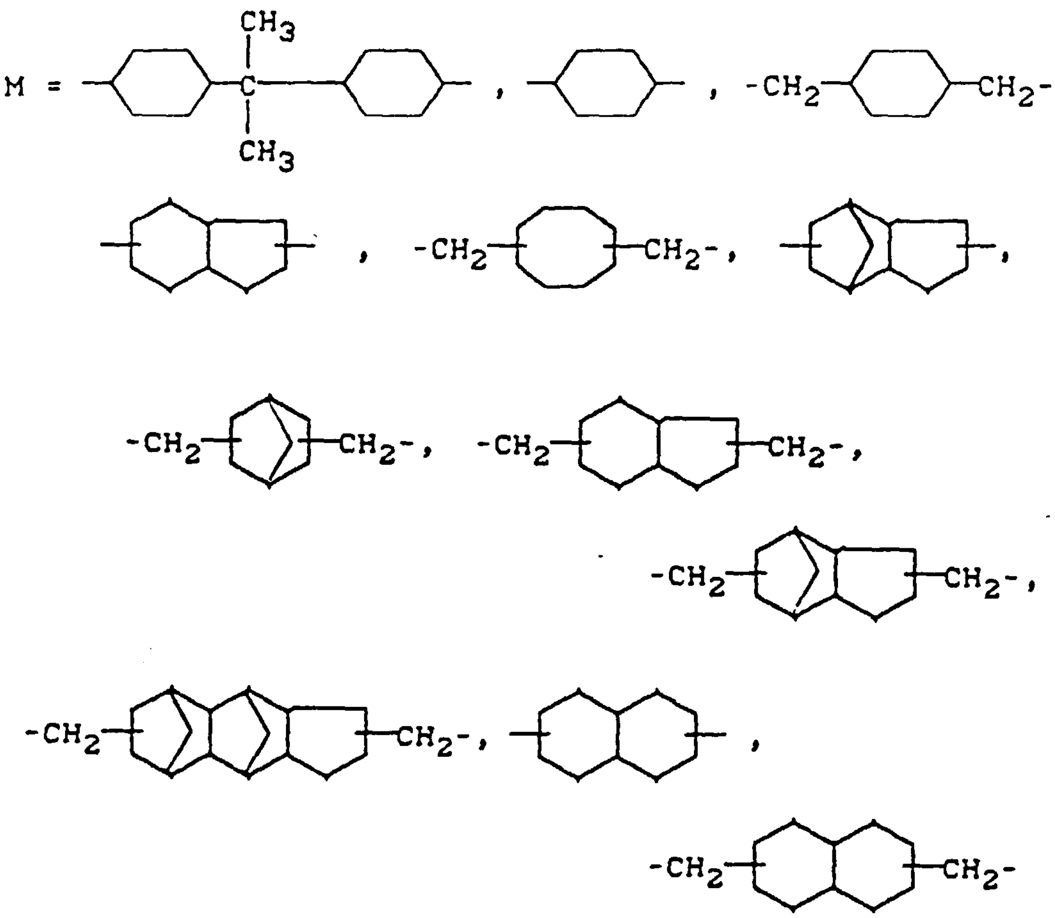

mit 2 Mol Carbonsäureanhydrid der Formel II und/oder III und/oder IV

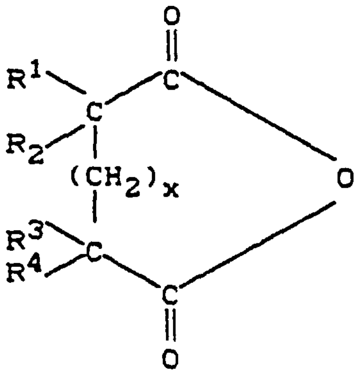

II

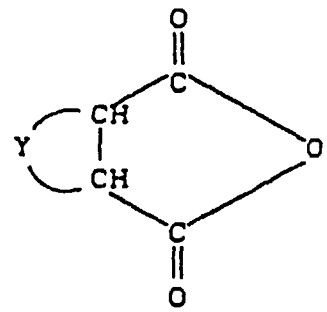

III

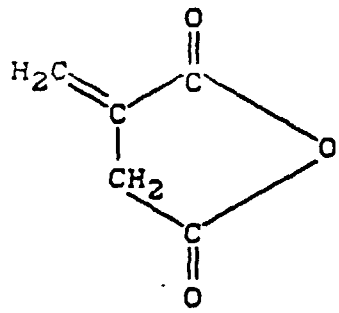

IV

wobei bei x = 0
$R^1$, $R^2$, $R^3$ und $R^4$ Wasserstoff
oder
$R^1$ undloder $R^3$ $C_1$ bis $C_{35}$-Alkyl oder Alkenyl und $R^2$ und $R^4$ sowie gegebenenfalls $R^1$ oder $R^3$ Wasserstoff
oder
$R^1$ und $R^4$ zusammen eine chemische Bindung und $R^2$ und $R^3$ Wasserstoff
oder
$R^1$ und $R^4$ eine chemische Bindung und $R^2$ und $R^3$ zusammen mit den Kohlenstoffatomen eine o-Phenylengruppe
bei x = 1
$R^1$, $R^2$, $R^3$, $R^4$ Wasserstoff
bedeuten und

Y = 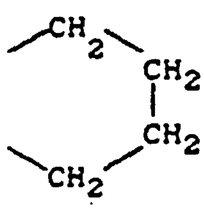 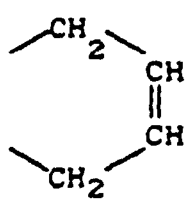 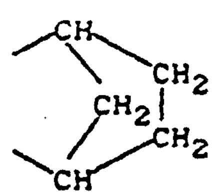

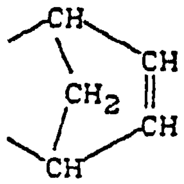

bedeutet,
bei Temperaturen von 100°C bis 300°C unter Inertgas und anschließende Überführung in Alkalisalze oder Ammoniumsalze erhalten wurden und anschließend mit thermoplastischen aromatischen Polycarbonaten oder einem gemisch mehrer aromatischer Polycarbonate vermischt werden.

## Claims

**1.** Thermoplastic moulding compositions prepared from

A) 95-10 wt.% of a thermoplastic aromatic polycarbonate or a mixture of two or more aromatic polycarbonates and

B) 5-90 wt.% of a mixture of

Ba) 100-0 parts by weight of one or more graft polymers and

Bb) 0-100 parts by weight of one or more thermoplastic vinyl copolymers,

characterised in that the polymers Ba and/or Bb were produced by emulsion polymerisation with emulsifiers which were obtained by melting together 1 mol of a diol of the formula I

$$HO - M - OH \qquad (I)$$

where

M = 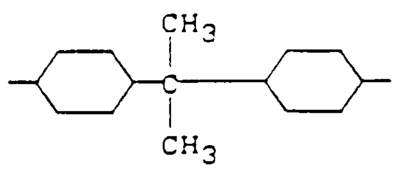 , 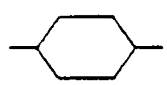 , 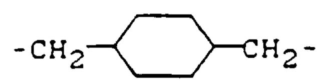

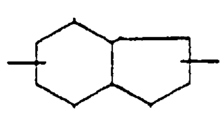 , 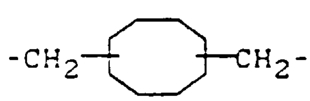 , 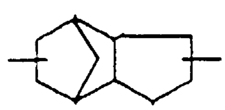 ,

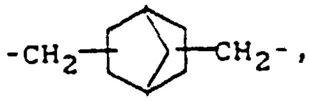

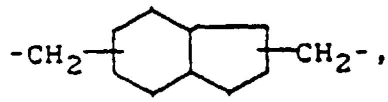

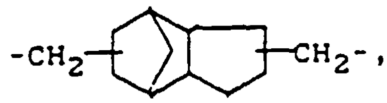

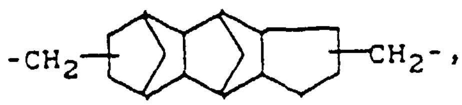

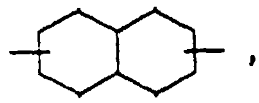

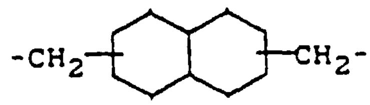

with 2 mol of carboxylic anhydride of the formula II and/or III and/or IV

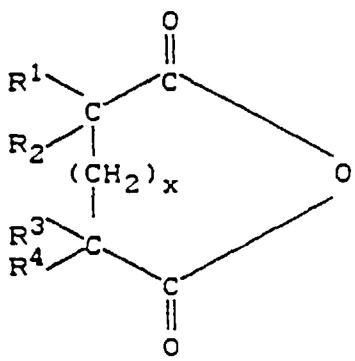

II

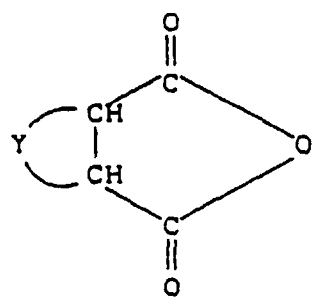

III

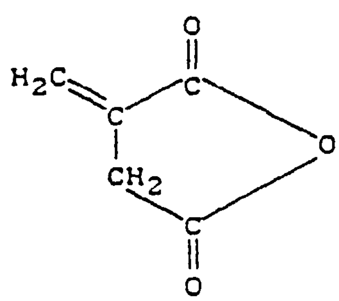

IV

wherein at x = 0
$R^1$, $R^2$, $R^3$ and $R^4$ mean hydrogen
or
$R^1$ and/or $R^3$ mean $C_1$ to $C_{35}$ alkyl or alkenyl and $R^2$ and $R^4$ and optionally $R^1$ or $R^3$ mean hydrogen
or
$R^1$ and $R^4$ together mean a chemical bond and $R^2$ and $R^3$ mean hydrogen
or

$R^1$ and $R^4$ mean a chemical bond and $R^2$ and $R^3$ together with the carbon atoms mean an o-phenylene group where x = 1
$R^1$, $R^2$, $R^3$, $R^4$ mean hydrogen
and Y means

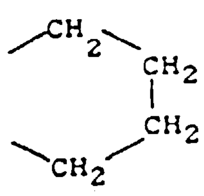

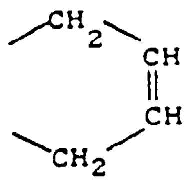

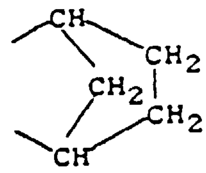

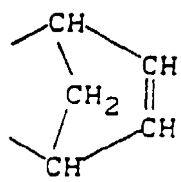

at temperatures of 100°C to 300°C under inert gas and subsequent conversion into alkali metal salts or ammonium salts.

2. Thermoplastic moulding compositions according to claim 1, characterised in that

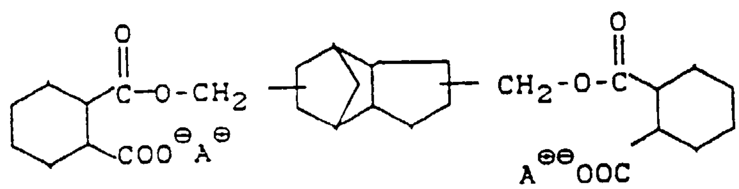

where A = alkali metal, ammonium, is used as emulsifier.

3. Thermoplastic moulding compositions according to claim 1, characterised in that

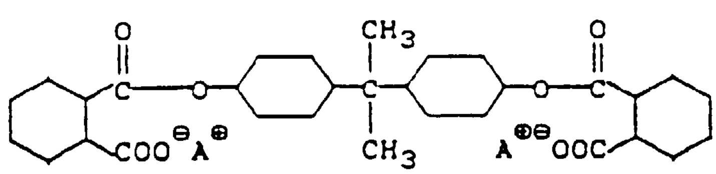

where A = alkali metal, ammonium, is used as emulsifier.

4. Thermoplastic moulding compositions according to claim 1, characterised in that the polymers Ba and/or Bb were produced by emulsion polymerisation with emulsifiers which were obtained by melting together 1 mol of a diol of the formula I

HO - M - OH (I)

where

M = 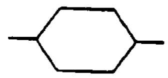 , 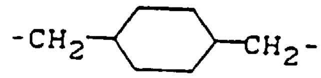

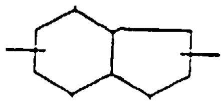 , 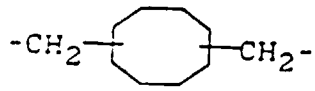 , 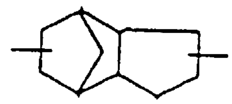 ,

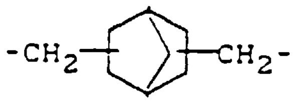 , 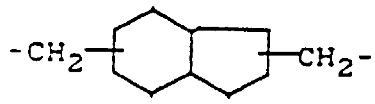 ,

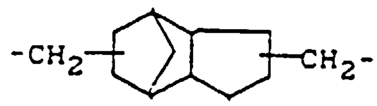 ,

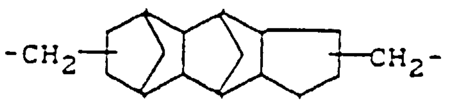 , 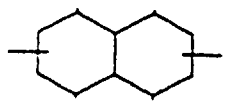 ,

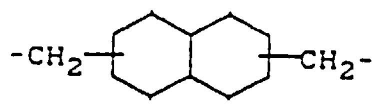

with 2 mol of carboxylic anhydride of the formula II and/or III and/or IV

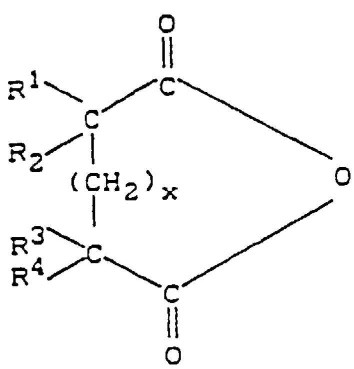

II

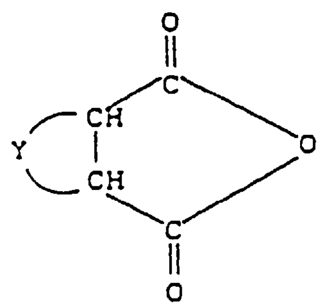

III

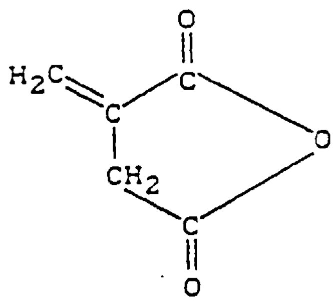

IV

wherein at x = 0
$R^1$, $R^2$, $R^3$ and $R^4$ mean hydrogen
or
$R^1$ and/or $R^3$ mean $C_1$ to $C_{35}$ alkyl or alkenyl and $R^2$ and $R^4$ and optionally $R^1$ or $R^3$ mean hydrogen
or
$R^1$ and $R^4$ together mean a chemical bond and $R^2$ and $R^3$ mean hydrogen
or
$R^1$ and $R^4$ mean a chemical bond and $R^2$ and $R^3$ together with the carbon atoms mean an o-phenylene group
where x = 1
$R^1$, $R^2$, $R^3$, $R^4$ mean hydrogen
and Y means

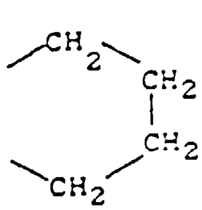 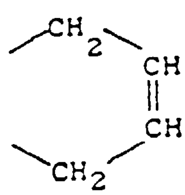 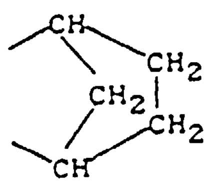

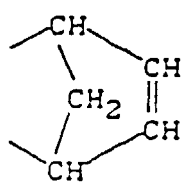

at temperatures of 100°C to 300°C under inert gas and subsequent conversion into alkali metal salts or ammonium salts.

**5.** Process for the production of thermoplastic moulding compositions from

A) 95-10 wt.% of a thermoplastic aromatic polycarbonate or a mixture of two or more aromatic polycarbonates and

B) 5-90 wt.% of a mixture of

Ba) 100-0 parts by weight of one or more graft polymers and

Bb) 0-100 parts by weight of one or more thermoplastic vinyl copolymers,

characterised in that the polymers Ba and/or Bb are produced by emulsion polymerisation with emulsifiers which are obtained by melting together 1 mol of a diol of the formula I

$$HO - M - OH \qquad (I)$$

where

M =

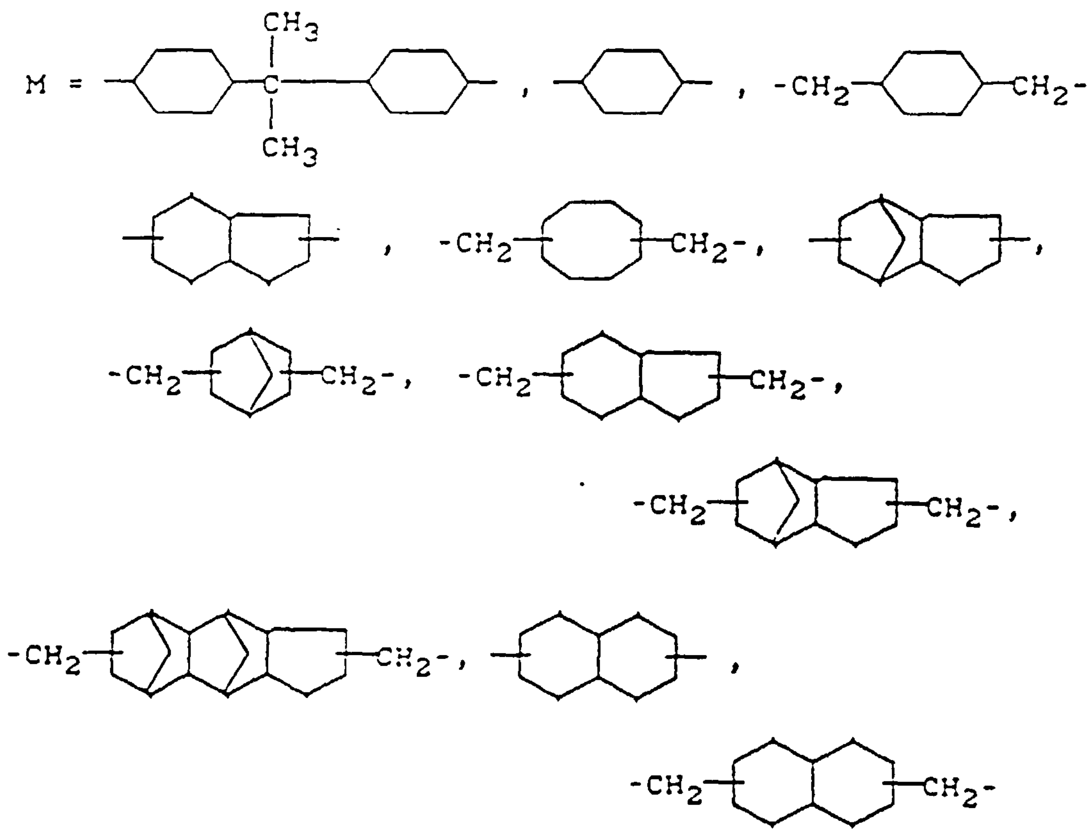

with 2 mol of carboxylic anhydride of the formula II and/or III and/or IV

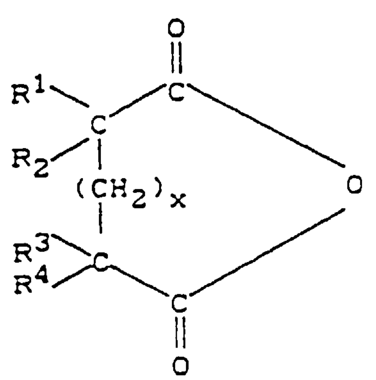

II

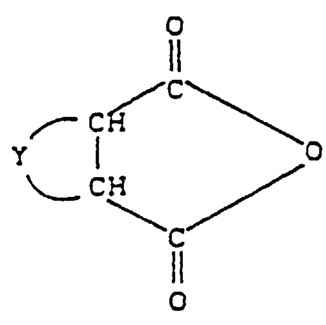

III

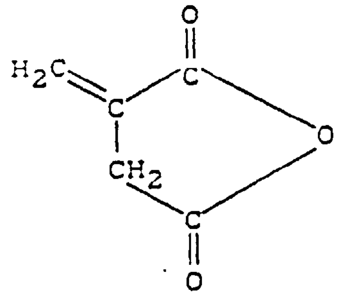

IV

wherein at x = 0
$R^1$, $R^2$, $R^3$ and $R^4$ mean hydrogen
or
$R^1$ and/or $R^3$ mean $C_1$ to $C_{35}$ alkyl or alkenyl and $R^2$ and $R^4$ and optionally $R^1$ or $R^3$ mean hydrogen
or
$R^1$ and $R^4$ together mean a chemical bond and $R^2$ and $R^3$ mean hydrogen
or
$R^1$ and $R^4$ mean a chemical bond and $R^2$ and $R^3$ together with the carbon atoms mean an o-phenylene group
where x = 1
$R^1$, $R^2$, $R^3$, $R^4$ mean hydrogen
and Y means

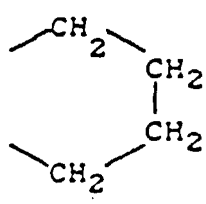

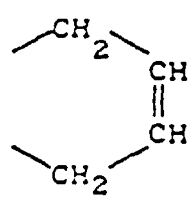

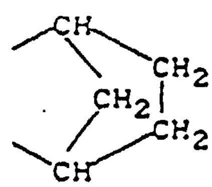

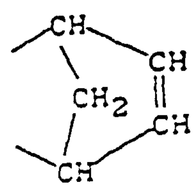

at temperatures of 100°C to 300°C under inert gas and subsequent conversion into alkali metal salts or ammonium salts and are then blended with thermoplastic aromatic polycarbonates or a mixture of two or more aromatic polycarbonates.

**Revendications**

1. Matières à mouler thermoplastiques consistant en

A) 95 à 10 % en poids d'un polycarbonate aromatique thermoplastique ou d'un mélange de plusieurs polycarbonates aromatiques et
B) 5 à 90 % en poids d'un mélange de

Ba) 100 à 0 parties en poids d'un ou plusieurs polymères greffés et
Bb) 0 à 100 parties en poids d'un ou plusieurs copolymères vinyliques thermoplastiques,

caractérisées en ce que les polymères Ba et/ou Bb ont été préparés par polymérisation en émulsion avec des agents émulsionnants qui ont été obtenus en fondant ensemble 1 mol d'un diol de formule I

$$HO - M - OH \qquad (I)$$

dans laquelle

M = 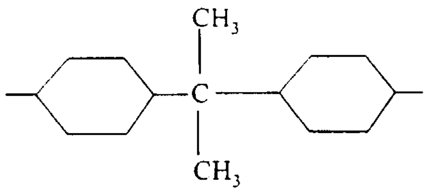 , 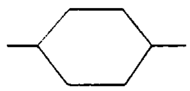 , 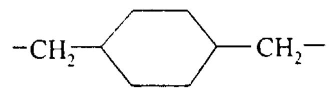

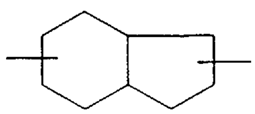 , 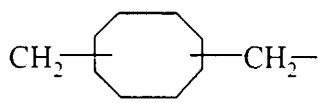 , 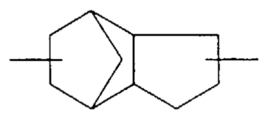 ,

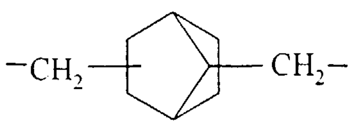 , 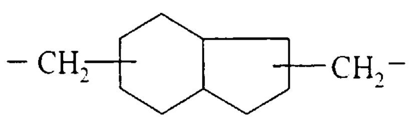 ,

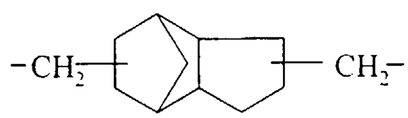 ,

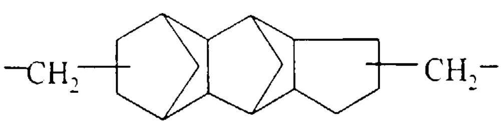 , 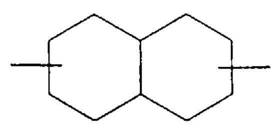 .

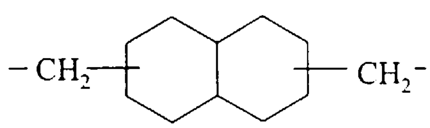

et 2 mol d'un anhydride d'acide carboxylique de formule II et/ou III et/ou IV

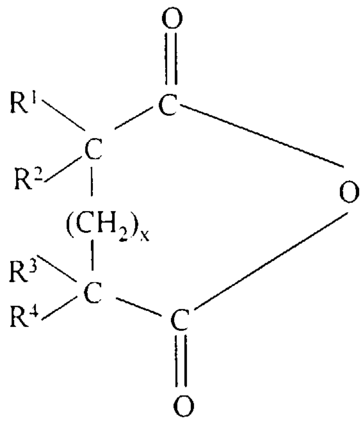

II

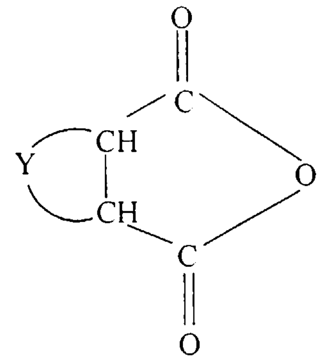

III

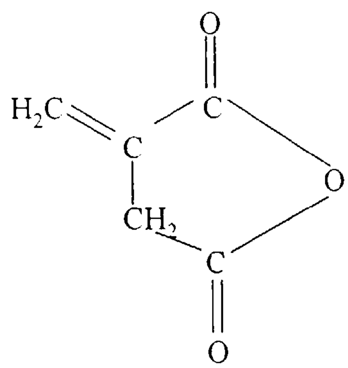

IV

dans lesquelles, lorsque x = 0
$R^1$, $R^2$, $R^3$ et $R^4$ représentent l'hydrogène
ou bien
$R^1$ et/ou $R^3$ représentent des groupes alkyle ou alcényle en $C_1$-$C_{35}$ et $R^2$ et $R^4$ ainsi que, le cas échéant, $R^1$ ou $R^3$, l'hydrogène
ou bien
$R^1$ et $R^4$ représentent ensemble une liaison chimique et $R^2$ et $R^3$ l'hydrogène,
ou bien
$R^1$ et $R^4$ représentent une liaison chimique et $R^2$ et $R^3$ forment ensemble et avec les atomes de carbone un groupe o-phénylène,
lorsque x = 1,
$R^1$, $R^2$, $R^3$ et $R^4$ représentent l'hydrogène et

Y = 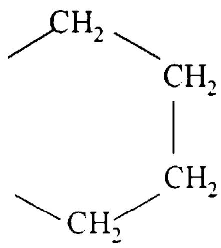 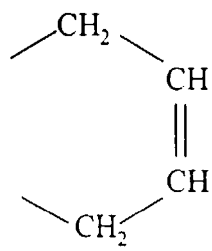 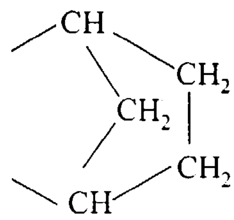

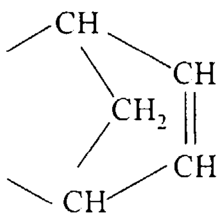

à des températures de 100 à 300°C en atmosphère de gaz inerte, et en convertissant ensuite en les sels alcalins ou d'ammonium.

**2.** Matières à mouler thermoplastiques selon la revendication 1. caractérisées en ce que l'on utilise en tant qu'agent émulsionnant le composé de formule

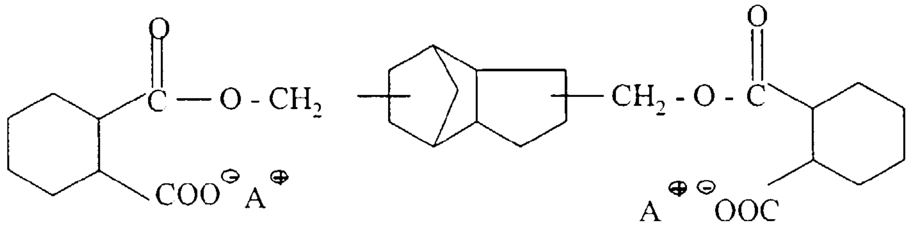

dans laquelle A = métal alcalin ou ammonium.

**3.** Matières à mouler thermoplastiques selon la revendication 1, caractérisées en ce que l'on utilise en tant qu'agent émulsionnant le composé de formule

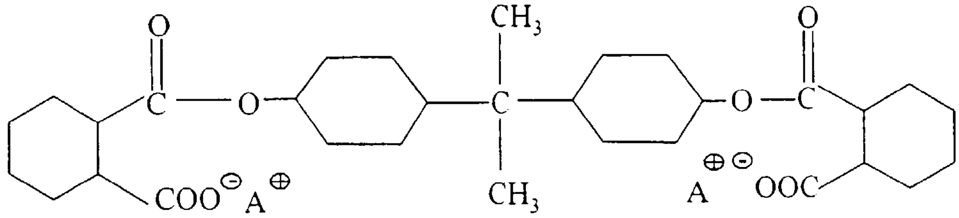

dans laquelle A = métal alcalin ou ammonium

**4.** Matières à mouler thermoplastiques selon la revendication 1, caractérisées en ce que les polymère Ba et/ou Bb ont été préparés par polymérisation en émulsion avec des agents émulsionnants obtenus en fondant ensemble 1 mol d'un diol de formule I

HO - M - OH (I)

dans laquelle

M = 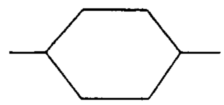 , 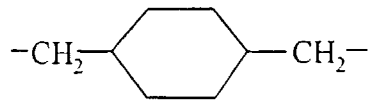

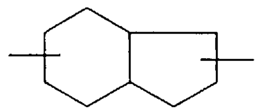 , 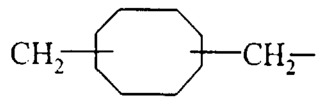 , 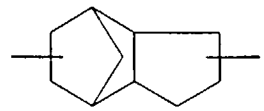 ,

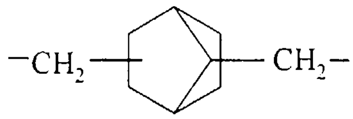 , 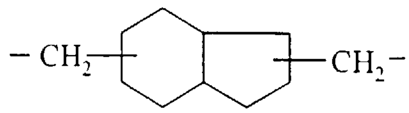 ,

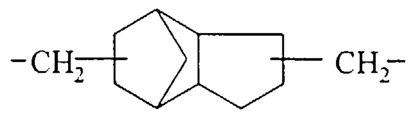 ,

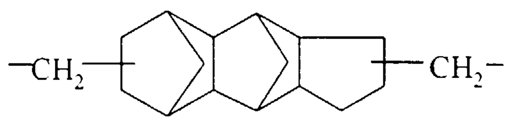 , 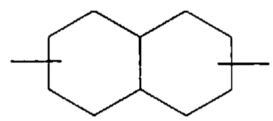 ,

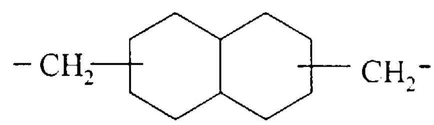

et 2 mol d'un anhydride d'acide carboxylique de formule II et/ou III et/ou IV

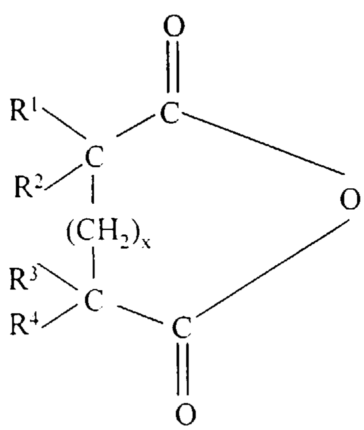

II

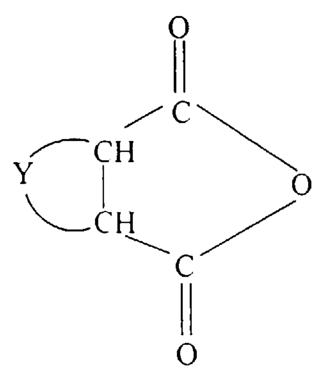

III

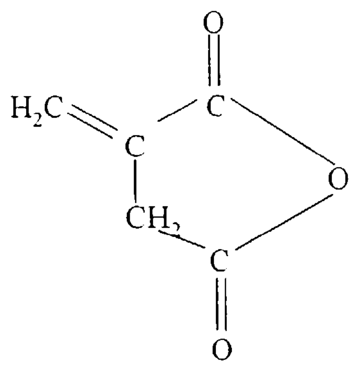

IV

dans lesquelles, lorsque x = 0
$R^1$, $R^2$, $R^3$ et $R^4$ représentent l'hydrogène
ou bien
$R^1$ et/ou $R^3$ représentent des groupes alkyle ou alcényle en $C_1$-$C_{35}$ et $R^2$ et $R^4$ ainsi que, le cas échéant, $R^1$ ou $R^3$, représentent l'hydrogène
ou bien
$R^1$ et $R^4$ représentent ensemble une liaison chimique et $R^2$ et $R^3$ l'hydrogène
ou bien
$R^1$ et $R^4$ représentent une liaison chimique et $R^2$ et $R^3$ forment ensemble et avec les atomes de carbone un groupe o-phénylène,
lorsque x = 1,
$R^1$, $R^2$, $R^3$ et $R^4$ représentent l'hydrogène et

Y = 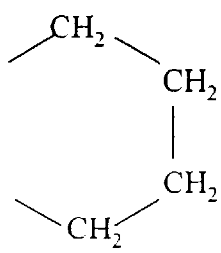 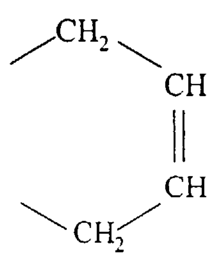 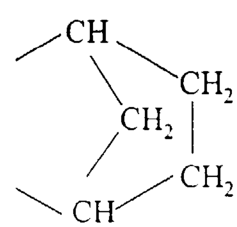

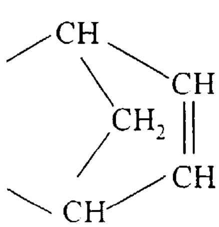

à des températures de 100 à 300°C, en atmosphère de gaz inerte, en convertissant ensuite en les sels alcalins ou d'ammonium.

**5.** Procédé pour la préparation de matières à mouler thermoplastiques consistant en

A) 95 à 10 % en poids d'un polycarbonate aromatique thermoplastique ou d'un mélange de plusieurs polycarbonates aromatiques et
B) 5 à 90 % en poids d'un mélange de
Ba) 100 à 0 parties en poids d'un ou plusieurs polymères greffés et

Bb) 0 à 100 parties en poids d'un ou plusieurs copolymères vinyliques thermoplastiques,

caractérisé en ce que les polymères Ba et/ou Bb sont préparés par polymérisation en émulsion avec des agents émulsionnants obtenus en fondant ensemble 1 mol d'un diol de formule I

HO - M - OH (I)

dans laquelle

M =

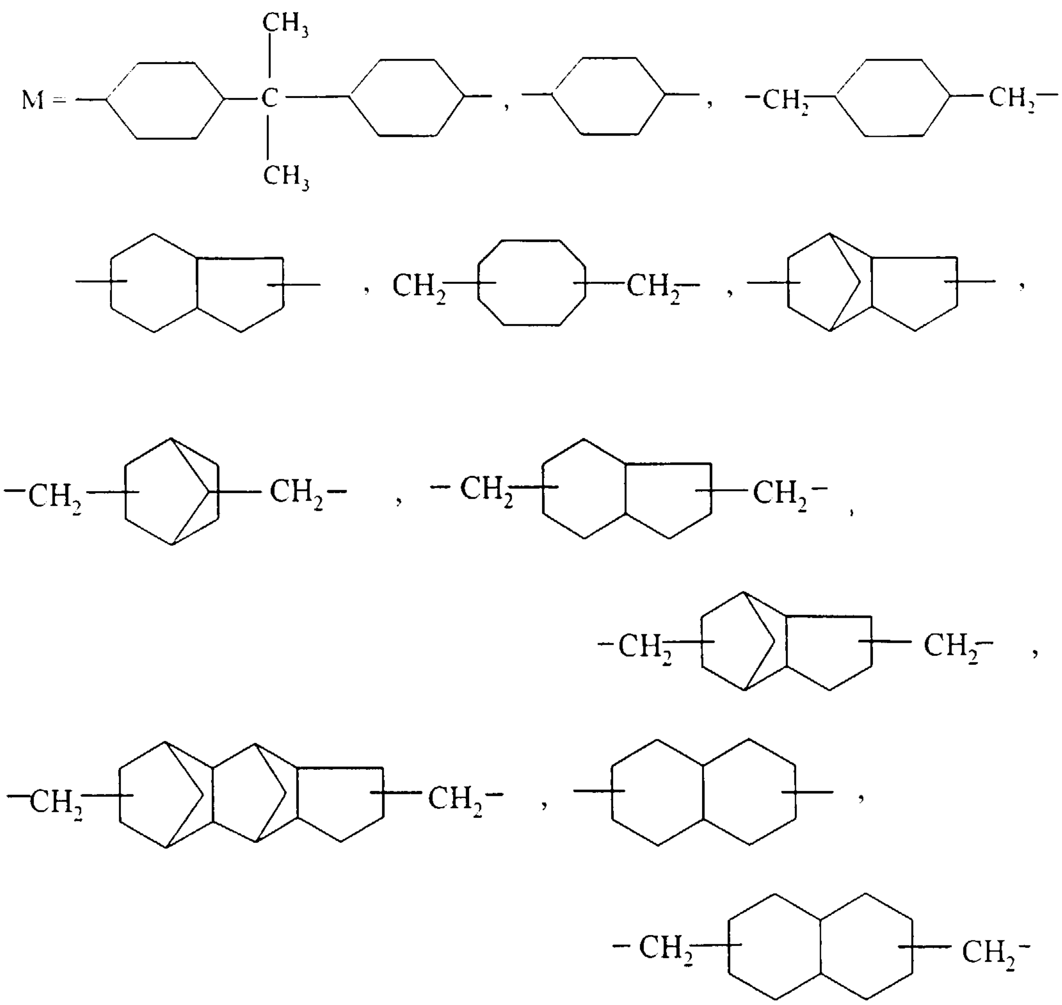

et 2 mol d'un anhydride d'acide carboxylique de formule II et/ou III et/ou IV

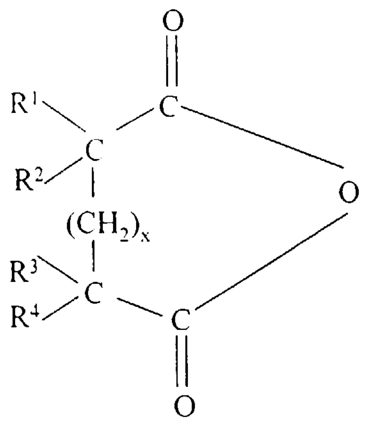

II

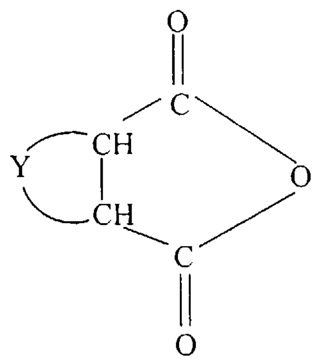

III

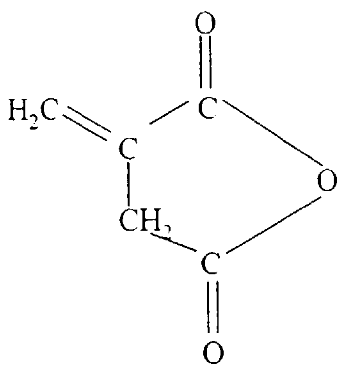

IV

dans lesquelles, lorsque x = 0
$R^1$, $R^2$, $R^3$ et $R^4$ représentent l'hydrogène
ou bien
$R^1$ et/ou $R^3$ représentent des groupes alkyle ou alcényle en $C_1$-$C_{35}$ et $R^2$ et $R^4$, ainsi que le cas échéant $R^1$ ou $R^3$ représentent l'hydrogène
ou bien
$R^1$ et $R^4$ représentent ensemble une liaison chimique et $R^2$ et $R^3$ l'hydrogène
ou bien
$R^1$ et $R^4$ représentent une liaison chimique et $R^2$ et $R^3$ forment ensemble et avec les atomes de carbone un groupe o-phénylène,
lorsque x = 1
$R^1$, $R^2$, $R^3$ et $R^4$ représentent l'hydrogène et

Y = 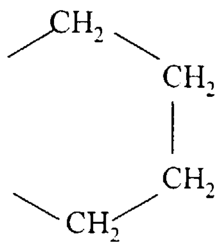 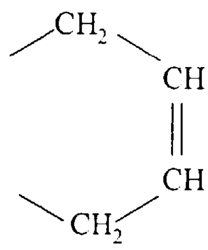 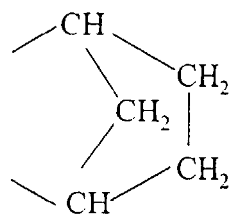

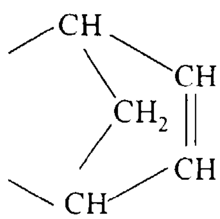

à des températures de 100 à 300°C en atmosphère de gaz inerte, en convertissant ensuite en sels alcalins ou d'ammonium,
puis on les mélange avec des polycarbonates aromatiques thermoplastiques ou avec un mélange de plusieurs polycarbonates aromatiques.